# EUROPEAN PATENT SPECIFICATION

(11) **EP 3 223 968 B1**
(45) Date of publication and mention of the grant of the patent: **14.04.2021**
(21) Application number: 16706807.1
(22) Date of filing: 09.02.2016
(51) Int. Cl.: B08B 3/02, B08B 3/04, B25J 11/00, B08B 15/02

(54) **INDUSTRIAL CLEANING INSTALLATION WITH VAPOUR CONDENSATION AND RELATED METHODS**
INDUSTRIELLE REINIGUNGSANLAGE MIT DAMPFKONDENSATION UND ZUGEHÖRIGE METHODEN
INSTALLATION ET METHODE DE NETTOYAGE INDUSTRIEL AVEC CONDENSATION DE VAPEUR

(43) Date of publication of application: 04.10.2017
(73) Proprietor: Elwema Automotive GmbH, 73479 Ellwangen (DE)
(72) Inventor: ALVAREZ, Antonio, 52224 Stolberg (DE); SONNTAG, Dietmar, 52152 Simmerath (DE)
(74) Representative: Lippert Stachow Patentanwälte Rechtsanwälte
(86) International application number: PCT/EP2016/052753
(87) International publication number: WO 2017/137073

(56) References cited:
- WO-A2-2012/048921
- DE-A1- 4 208 665
- DE-A1-102014 101 123
- FR-A1- 2 649 913
- US-A1- 2003 121 171
- US-B1- 6 228 180

## Description

### TECHNICAL FIELD

The present invention generally relates to the field of industrial cleaning of workpieces, and more specifically to cleaning installations and methods for machined metal parts, in particular components of automotive engines, e.g. cylinder blocks, cylinder heads, crankshafts or of transmission components, e.g. gearboxes.

### BACKGROUND ART

German patent application DE 42 08 665 A1 discloses a drying installation with recovery of heat and cleaning agents. The air flow intake is arranged in the lowermost part of the drying vessel from where air is recirculated towards an uppermost inlet of the vessel.

In the field of concern, workpieces are typically cleaned by processes that involve a heated cleaning liquid, e.g. by flood-washing (German: Flutwaschen), high-pressure cleaning, high-pressure deburring and the like, as disclosed for instance in international patent application WO 2006/077 037 A1 or in German utility model DE 20 2013 100 959 U1.

These processes typically create vapour and mist due to heat-induced evaporation and/or jets creating droplets, thereby creating a vapour-charged atmosphere. This atmosphere is known to be detrimental to the lifetime of robots typically used in automated cleaning installations. The detrimental effect of vapours is enhanced among others by cleaning agents contained in the cleaning liquid and thus in the vapour. As will be understood, industrial robots used in these kinds of installations are both expensive and sensitive pieces of equipment.

An improvement in this respect is provided by patents US 9,221,082 B2 or EP 2 345 483 B1, which describe tank-shaped cleaning receptacles for partially containing vapours and reducing their spread, e.g. when compared to open-air processes described in WO 2006/077 037 A1.

More specifically, EP 2 345 483 B1 discloses an installation with a platform and several such processing receptacles having an opening accessible from the workspace and with an industrial robot for handling a workpiece mounted on the platform.

EP 16 706 807.1 - 1703

In a design manufactured by the Applicant, a housing is further installed on the platform, for enclosing the atmosphere of a workspace and housing the industrial robot therein.

Installations of this kind as manufactured by the Applicant have previously been equipped with an air recirculation device (German: Umluftvorrichtung) having a vapour condenser in order to "dry" i.e. dehumidify process air from the workspace. The air recirculation device has ductwork with an intake for admitting vapour-charged air from the workspace to the vapour condenser and an exit for returning dehumidified air from the vapour condenser to the workspace.

The vapour condenser serves like an air conditioning device and allows maintaining favourable operating conditions for the industrial robot used to handle the workpieces inside the workspace. To increase energy efficiency of air conditioning, the vapour condenser typically includes a heat recovery unit, that uses heat recovered from condensation for heating dehumidified air before it is returned to the workspace. A similar installation is known from international patent application WO 2012/048 921 A2. The installation of WO 2012/048 921 A2 presents the features of the preamble of claim 1.

FR 2 649 913 A1 in turn discloses a cleaning installation with air recirculation through a vapour condenser, but devoid of industrial robot for handling the workpiece.

The aforementioned approaches with air recirculation to and from an enclosed workspace maintain a stable atmosphere in terms of temperature and humidity that is beneficial for the robot, while reducing heat loss to the outside. However, they increase complexity in terms of required equipment and maintenance procedures.

### TECHNICAL PROBLEM

In view of the prior art, it is a first and primary object of the present invention to provide an installation and methods that further improve the atmosphere inside the workspace, especially in terms of operating conditions for an industrial robot.

It is another, secondary object of the invention to simplify maintenance procedures, especially concerning the vapour condenser of the air recirculation device.

EP 16 706 807.1 - 1703

### GENERAL DESCRIPTION OF THE INVENTION

The industrial installation is designed for cleaning industrially manufactured workpieces, such as machined metal parts, in particular for cleaning internal combustion engine components, transmission components and the like as used in the automotive industry.

The installation typically has a housing for enclosing a workspace above a platform, the housing containing vapours with respect to the outside. It further comprises any suitable kind of industrial robot, e.g. in articulated robot, mounted inside the housing, in particular on the platform, for automatically handling a workpiece in the workspace.

For eliminating vapour created by one or more of cleaning steps of the process to be carried out by the installation, the installation is equipped with an air recirculation device (German: Umluftvorrichtung) that has a vapour condensation unit (German: Schwadenkondensator), hereinafter shortly called vapour condenser. The installation is provided with ductwork with one or more intakes for admitting vapour-charged air from the workspace to the vapour condenser and one or more exits for returning dehumidified air from the vapour condenser directly or indirectly to the workspace. The vapour condenser preferably includes a heat recovery unit, e.g. a heat exchanger or a refrigeration machine or the like, that recovers heat extracted from the vapour containing process air during condensation.

In view of the objects mentioned above, the present invention proposes that the vapour condenser is generally arranged, preferably with all its functional components subject to maintenance, below the top of the housing, and more preferably below the platform. Furthermore, the invention proposes that each of the one or more intakes is arranged at a level below the upper half of the workspace, also preferably on or below the platform.

In combination, these features allow for an improved flow path of recirculating vapour-containing air inside the housing while both reducing the extent of air duct piping required for the ductwork and simplifying maintenance of the installation in general and of the vapour condenser in particular. Since the intakes leading towards the vapour condenser are arranged in the lower half of the workspace or ideally below the platform, the installation is improved in terms of fluid dynamics. The main currents of the vapour-containing air flow can be routed so as to substantially avoid those regions of the workspace, in which the robot is predominantly operating.

Without the invention being bound by theory, in terms of fluid dynamics the vertical position of the intakes appears to be a factor that decisively influences the flow pattern of vapour-containing air.

At the same time, placing the vapour condenser at a lower level with respect to the prior art (according to which the vapour condensation unit has been arranged on the rooftop of the installation, as illustrated e.g. in WO 2012/048 921 A2) reduces the piping lengths for connecting the intakes and simplifies access for maintenance purposes.

In one embodiment, the installation has a floor-mountable support structure that supports the housing and the platform at a raised level with respect to the factory floor, e.g. raised by at least 1m, preferably raised to a height in a range of about 1,8m to 2,5m above the factory floor. Especially without such support structure the vapour condenser can be arranged on the platform at the side of the housing, i.e. laterally to the sidewalls of the housing. More preferably however, especially when a lower support structure is used, the vapour condenser can be arranged below the platform, in particular to a large extent within the support structure but so as to be readily accessible from the factory floor level.

In a further embodiment, the installation comprises at least one processing receptacle with an opening accessible from the workspace. The receptacles can be configured like a tank or tub, e.g. to contain a cleaning liquid, and may reduce the escape of vapours into the workspace. For further optimization of fluid dynamics, at least one intake, preferably each of the one or more intakes that lead vapour to the condenser, is arranged in the at least one processing receptacle, thereby allowing evacuating vapours directly therefrom and/or drawing vapours of neighbouring receptacles into the receptacle equipped with the intakes. In this way, vapour emissions towards critical zones of the workspace and thus towards the robot are reduced.

In order to avoid escape of heat and cleaning agent, it is known to provide a shutter door in a side wall of the housing through which the workpieces are passed. In such cases, a preferred embodiment provides an air curtain device, also called air door (German: Luftschleier) that is associated to the shutter door, with the air curtain device being fluidly connected to a first outgoing duct of the air recirculation device thus acting in part or exclusively as exits for dehumidified air. In this embodiment, each intake of the air recirculation device can be arranged at a level below the air curtain device, in particular below the effective discharge zone of the air curtain device and at least below the upper end of the curtain. Hence, major current paths that flow mainly downwards towards the intakes are obtained, which can be readily directed to avoid the statistically predominant location of the industrial robot.

In a further embodiment, the air curtain device is of the horizontal discharge type, preferably with two facing discharge elements at the shutter door inside the housing. The horizontally discharging elements can be arranged in pillar like manner, e.g. resting directly on the platform.

To avoid the vapour flow paths, the industrial robot is preferably arranged on the far side of one or more of the processing receptacles with respect to the shutter door. Similarly, each of the one or more intakes, when seen in top view, is preferably located between the robot and the shutter door. Choosing suitable horizontal positions of the air intakes allows avoiding flows that cross central zone around the mounting base of the robot. With suitable positioning, all intakes can be provided in one of the processing receptacles or distributed among the processing receptacles in order to extract vapour directly from where it mainly originates.

To further simplify maintenance and reduce installation cost, the vapour condenser can be configured as a unit that is housed in a cabinet-type enclosure, a floor-mountable casing or the like, arranged on the base of the support structure, preferably with doors accessible from the factory floor. In this embodiment, the vapour condenser unit preferably comprises a refrigeration machine as heat recovery unit, with an evaporation cooler module and a heating module that are configured as separately exchangeable modules. They can be mounted as tray-like module in the cabinet-type enclosure in a removable manner, e.g. with clamp type fasteners for fluidly connecting the modules to the ductwork.

In typical installations there are at least two processing receptacles, including a blow-drying receptacle for drying the workpiece after a washing process using cleaning liquid. With such installations a blow-drying nozzle of the blow-drying receptacle, which is suitable for drying cleaned workpieces, can be connected to a second outgoing duct of the air recirculation device. Combined with air intakes inside the blow-drying receptacles, heat recovery and/or condensation efficiency can be improved. Moreover, a separate outgoing duct may allow to control heat and/or volume flow directly from the vapour condenser to the blow-drying process. Accordingly, in a preferred embodiment each intake of the air recirculation device that admits vapours to the vapour condenser is arranged in the blow-drying receptacle.

In a further embodiment, especially when taking in air directly from one or more of the cleaning receptacles, each of the intakes has an associated mist eliminator. Condensed liquid captured by the mist eliminator can be immediately drained into the receptacle, from where it is in turn drained into a wastewater tank or the like. Reducing the moisture content at the air intakes increases efficiency of the vapour condenser.

In a preferred configuration of the air recirculation device, it comprises a first outgoing duct equipped with a first air blower for supplying dehumidified heated air from the vapour condenser at a first rate, in particular at a lower rate to the air curtain device, and a separate second outgoing duct equipped with a second air blower for supplying dehumidified heated air from the vapour condenser at a second rate, in particular at a higher rate to the blow-drying receptacle. Using separate ducts and blowers that can operate in parallel allows for reducing the overall energy consumption and/or specifically controlling volume flows as required.

In particular, the second rate blower may be a controllable higher rate blower suitable for operating at medium and high pressures, feeding air to the air curtain device at medium pressure operation and feeding air to the blow-drying receptacle at high pressure operation.

In a simple configuration for controlling volume flows from the vapour condenser, the second outgoing duct comprises a bifurcation with a first branch connected to the blow-drying receptacle and a second branch connected to the air curtain device and a valve in the first branch to variably open and close the connection to the blow-drying receptacle. With this arrangement, an increased flow may be selectively provided at short intervals for operating the air curtain or the blow-drying device as required. The air blowers can independently supply two outgoing ducts at suitable rates for recirculating air that has been dehumidified and/or heated in the vapour condenser.

Especially when combined with the cabinet-type enclosure, the first low rate air blower and the second high rate air blower can be arranged in the enclosure of the vapour condenser, in particular in the cabinet-type enclosure.

A further embodiment has at least three processing receptacles, including a first washing receptacle for pre-washing workpieces with a cleaning liquid, a second washing receptacle for high-pressure cleaning and/or deburring workpieces and a blow-drying receptacle for drying the washed part. Air intakes that lead to the vapour condenser may be arranged in some or all of these receptacles respectively, or all intakes may be arranged in one of them, in particular in the blow-drying receptacle.

According to further independent aspect, each of the processing receptacles has an upper mounting flange removably fixed to the platform, typically so that it's respective upper opening coincides with a corresponding through hole in the platform. The receptacles are preferably removably fixed by suitable mechanical fasteners, e.g. by a nut and bolt screw connection. In contrast to typical welding, the suitable removable fastening simplifies maintenance and/or retrofitting operations.

The invention also relates to methods for industrial cleaning of engine components or transmission components, which take advantage of the proposed arrangement of the vapour condenser, ductwork and/or intake positioning. According to the invention, the methods are preferably performed using an installation with an air recirculation device equipped with a vapour condenser for condensing vapours, preferably having a heat recovery unit, with a housing arranged on a platform for enclosing a workspace of an industrial robot that handles automotive workpieces and with processing receptacles including a washing receptacle and a blow-drying receptacle, e.g. arranged side-by-side, each processing receptacle preferably having an upper opening accessible from the workspace above the platform. The housing preferably has an automatic shutter door equipped with an air curtain device.

In known manner, the cleaning methods typically comprise successive cleaning sequences with at least the steps of:
- washing a workpiece in the washing receptacle using a heated washing liquid; and
- blow drying the cleaned workpiece in the blow-drying receptacle.

At least one of these processes generates a significant amount of vapour or mist.

According to the invention, the method may further comprise continuously recirculating process air from the workspace, by admitting vapour containing process air from one or more intakes located at a level on or below that of the platform, drying the intake air by condensing vapours in the vapour condenser and returning the dried air to the workspace, preferably by using the dried air to supply the air curtain device.

This method allows a flow pattern of vapour emanating from the washing receptacle and/or from the blow-drying receptacle and flowing towards the intake(s), that remains substantially in the lower half of the workspace and that does not cross the predominant positions of the industrial robot. Among others, a flow of vapour through the upper half of the workspace can be substantially eliminated.

According to a further independent method aspect, recirculated air is dehumidified and then heated to an exit temperature (Tout), at which it is returned to the workspace, the exit temperature (Tout) being higher than the mean outside temperature (Tenv) and lower than or equal to the intake temperature (Tin) of vapour-charged air admitted from the workspace to the vapour condenser. Preferably the exit temperature (Tout) is controlled to satisfy Tenv < Tout < 0,9 Tin. A lower exit temperature (Tout) enables a descending flow of air from the main recirculation exit towards the intakes. Air at higher temperature may in turn be fed to the blow-drying receptacle for instance.

Alternatively, the exit temperature at the ductwork exit(s) may be controlled to be substantially equal to the intake temperature at the intakes. However, for proper operation of the air curtain device this is not necessary, since it is sufficient to blow air at a temperature above the ambient temperature outside the housing.

According to another independent method aspect, a low rate air blower continuously recirculates air from within a processing receptacle of the installation to the air curtain device and wherein the vapour condenser recovers heat from condensation for heating the dried air.

According to yet another independent method aspect, a high rate air blower feeds dehumidified and heated air to alternatively supply an air curtain device that equips a door of the installation and a blow-drying device, in particular a blow-drying receptacle. The high rate air blower may blow at different rates, e.g. a lower rate for the air curtain device, when the shutter door opens, and a higher rate for blow-drying.

In summary, the invention relates to an industrial installation for cleaning engine components or transmission components. It may comprise a housing for enclosing a workspace above a platform; at least one processing receptacle with an opening accessible from the workspace; an industrial robot mounted inside the housing, in particular on the platform, for handling a workpiece in the workspace; and can further be equipped with an air recirculation device having a vapour condenser and ductwork for forwarding vapour-charged air from the workspace to the vapour condenser and for returning dehumidified air from the vapour condenser to the workspace, the vapour condenser including a heat recovery unit.

In a nutshell, simplified ductwork and improved flow patterns can both be achieved by a configuration, in which the vapour condenser is arranged substantially below the top of the housing, in particular on the platform at the side of the housing or below the platform, preferably with its base at the factory floor level. This configuration also simplifies maintenance.

### BRIEF DESCRIPTION OF THE DRAWINGS

Several preferred and non-limiting embodiments of the invention will now be described, by way of example, with reference to the accompanying drawings, in which:
FIG.1: shows a side view of a first industrial cleaning installation according to the invention;
FIG.2: shows a partial perspective view of a second, preferred industrial cleaning installation according to the invention;
FIG.3A-3B: show, in two partial perspective views, a preferred air recirculation device, which comprises a vapour condenser and ductwork, in accordance with the invention;
FIG.4: shows a front elevational view of a preferred vapour condenser arrangement in a cabinet-type enclosure according to the invention;
FIG.5: shows a schematic block diagram of the vapour condenser of Fig.4, operating as a refrigeration machine;
FIG.6: shows a side view of a third industrial cleaning installation according to the invention; and
FIG.7: shows a schematic cross-sectional view of a conventional cleaning installation according to prior art.

### DESCRIPTION OF PREFERRED EMBODIMENTS

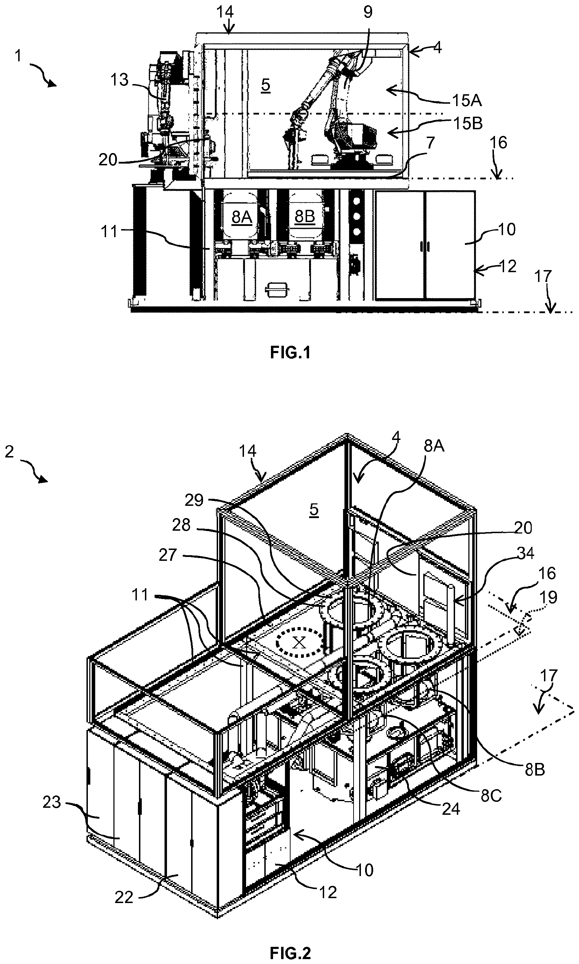

FIG.1 shows a side elevation of the large side of an industrial cleaning installation 1. The cleaning installation 1 includes a housing 4 for an articulated industrial robot 9, e.g. a vertically articulated 6-DOF robot. A workspace 5 inside the housing 4 is enclosed, e.g. by four sidewalls, a roof and a platform 7 in suitable manner, a simple configuration being a rectangular cuboid. The sidewalls of the housing 4 can for example be configured according to German utility model DE 20 2013 101 377 U1. Generally, the housing 4 forms a substantially air-tight enclosure to contain the inner atmosphere of the workspace 5.

The cleaning installation 1 includes a number of processing receptacles 8A, 8B, 8C for performing various steps of a cleaning process in order to clean a machined metal part such as a cylinder block, a cylinder head or a crankshaft of an internal combustion engine (not shown). Suitable cleaning processes are known to the skilled person, and typically include pre-washing or flood-washing, high-pressure washing and/or deburring followed by hot air drying. The specifics of the cleaning processes are not decisive, except for the fact of vapour being generated by using cleaning liquid heated e.g. to 50-70°C and/or high-pressure jets of cleaning liquid. The industrial robot 9 holds the workpiece to be cleaned in the receptacles 8A, 8B, 8C for processing and transfers them there between.

In addition, FIG.1 shows an external robot 13 arranged outside the housing 4 for passing workpieces to the internal industrial robot 9, i.e. into and out of the workspace 5 through an automatic shutter door 20 arranged on the small sidewall opposite the industrial robot 9. The automatic shutter door 20 is arranged in the lower half 15B of the workspace 5. The industrial robot 9, depending on its posture, extends into the upper half 15A of the workspace 5. The roof that forms the top 14 of the housing 4 is arranged at a level that allows sufficient vertical space for the industrial robot 9, e.g. at about 3,6-6m from a ground level 17, typically at the factory floor. As will be understood, the industrial robot 9 inside the housing 4 - in contrast to the external robot 13 - is exposed to the inner atmosphere created by the cleaning processes, i.e. to vapours and mist.

The platform 7 is arranged at a raised platform level 16 with respect to the ground level 17 approximately at half the total height of the cleaning installation 1 from ground level 17 to top 14, e.g. in a range of about 1,8m-3m from the ground level. The platform 7 and thus the housing 4 are supported by a strong support structure 11, e.g. built of welded metal beams. With the platform 7, the support structure 11 carries among others industrial robot 9, the processing receptacles 8A, 8B, 8C and provides space for the equipment of the cleaning installation 1. Accordingly, the workspace 5 is arranged above the platform level 16 of the platform 7 and typically has a base area comprised in the base area of the support structure 11. This configuration allows for a small total footprint of the cleaning installation 1. Depending on the overall weight, the support structure 11 may allow installation of the cleaning installation 1 as a unit, e.g. by means of a factory crane, usually without the robots 9, 13. The processing receptacles 8A, 8B, 8C are supported by the platform 7 and arranged within the reach of the industrial robot 9.

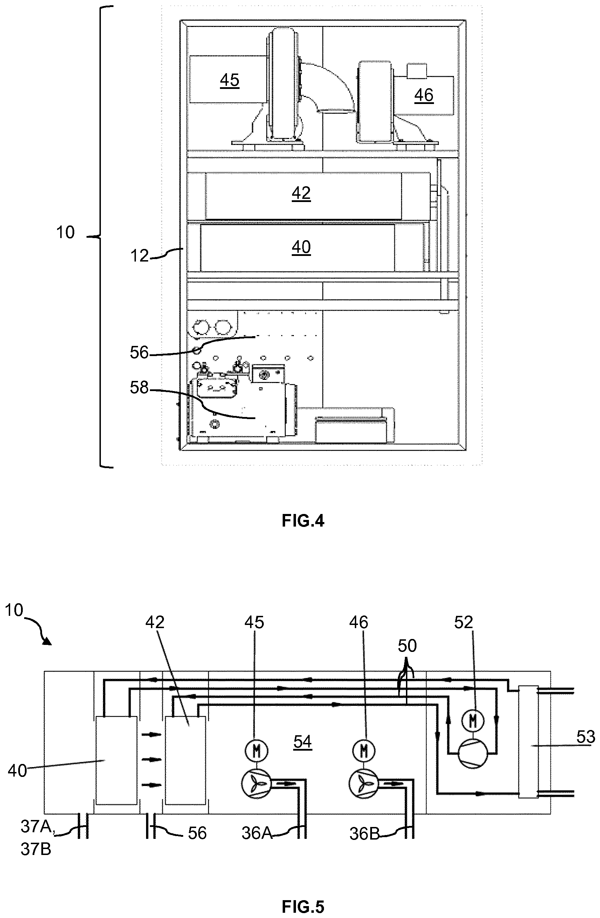

The cleaning installation 1 includes a vapour condenser 10, e.g. as described in more detail with respect to FIG.4-5. The vapour condenser 10 is designed as a floor-mounted appliance and arranged in a cabinet-type enclosure 12. The main purpose of the vapour condenser 10 is to demist and dehumidify air taken from the workspace 5 so as to maintain an acceptable degree of vapour and mist inside the housing 4, especially with regard to the operating conditions of the industrial robot 9.

As seen in FIG.1, the vapour condenser 10 is arranged on the base of the support structure 11, i.e. approximately at the ground level 17, thereby being placed below the platform level 16. Besides allowing to significantly reducing vapour flow into the upper half 15A of the workspace 5 without additional ductwork, this placement of the vapour condenser 10 reduces total wiring length and also simplifies maintenance of its components. Maintenance is further simplified by use of a standard cabinet-type enclosure 12.

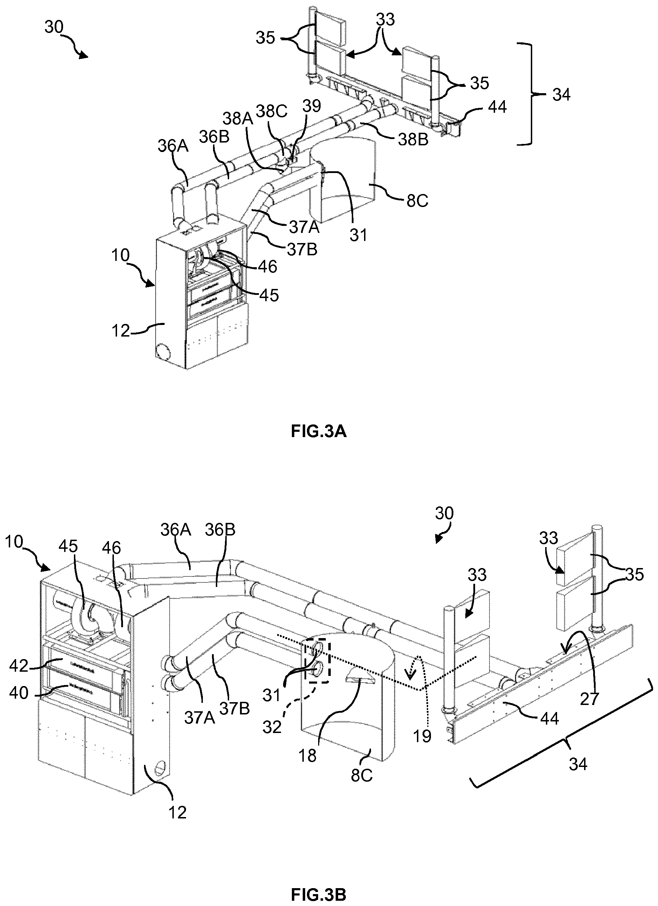

Turning to FIG.2, a preferred second embodiment of the industrial cleaning installation 2 is partially shown, with some of its typical components, e.g. both robots 9, 13, a plate structure forming the platform 7 and the walls and roof of the housing 4 not being shown in FIG.2 to illustrate ductwork and the air recirculation device best seen in FIG.3A-3B. Except for the specific placement of the vapour condenser 10, the cleaning installation 2 of FIG.2 has substantially the same features as described with respect to FIG.1, which are not repeated.

FIG.2 shows in more detail the location and configuration of three processing receptacles, namely a pre-washing receptacle 8A, a main washing receptacle 8B, e.g. for high-pressure washing and/or deburring e.g. according to patents US9221082B2 or EP2345483B1, and a blow-drying receptacle 8C, for subsequently drying the workpiece. Reference is made to EP2345483B1 as to the tub-shaped design of processing receptacles and as to the cleaning fluid circuit. Each processing receptacle 8A, 8B, 8C (their side walls not being shown) forms a substantially tank-shaped or tub-shaped receptacle for containing liquids with an upper opening accessible to the robot 9 from the workspace 5. Each processing receptacle 8A, 8B, 8C has an upper mounting flange 28 that can be fixed in removable manner from underneath to the platform 7 (not shown), so that its upper opening coincides with a respective through hole in the platform (not shown). Accordingly, the processing receptacle 8A, 8B, 8C can be individually installed and removed e.g. for maintenance purposes. In the example of FIG.2, the mounting flanges 28 have a plurality of screw holes 29 for nut-and-bolt fastening to the platform 7, other mechanical fastening needs not being excluded. The support structure 11 includes a rectangular frame 27 to hold the plate structure forming the platform 7 (not shown in FIG.2) and defining the platform level 16.

FIG.2 in combination with FIG.3A-3B best illustrates the configuration of a preferred air recirculation device, generally indicated at 30 {Anm. DE: Umluftvorrichtung}. The air recirculation device 30 continuously extracts air from the workspace 5 to the vapour condenser 10 and supplies dried and heated air back to the workspace 5 by means of suitable ductwork, best seen in FIG.3A-3B.

In this embodiment, the ductwork includes two parallel outgoing ducts 36A, 36B that can operate independently to return air processed by the vapour condenser 10 back to the workspace 5. Both outgoing ducts 36, 36B fluidly connect a respective outlet of the vapour condenser 10 to a collector 44 of a horizontal-discharge type air curtain device 34. The collector 44 can be an integral part of the platform frame 27, as seen in FIGS.2-3B. The outgoing ducts 36A, 36B supply dehumidified heated air from the vapour condenser 10.

A preferred air curtain device 34 (also called "air door") has two oppositely facing air curtain discharge nozzles 35 arranged immediately behind the shutter door 20 (FIG.2) inside the housing 4 and creating a substantially horizontal flow pattern. The discharge nozzles 35 are arranged on pillar-like vertical elements forming vertical frames of the opening controlled by the shutter door 20. The air curtain device 34 allows for reducing air exchange between the housing 4 and the outside, i.e. to avoid exchange between the inside and outside atmospheres and thus increases energy efficiency. In the embodiment of FIG.2 and FIG.3A-3B, the discharge nozzles 35 of the air curtain device 34 also constitute the exits 33 of the air recirculation device 30 that return heated air to the workspace 5.

The first outgoing duct 36A immediately connects a low-pressure air blower 45 of the vapour condenser 10 to the collector 44 of the air curtain device 34. This allows for independent regulation of the volumetric flow rate required for maintaining technically stable conditions of the atmosphere inside the housing 4, e.g. by setting the air blower speed of the low-pressure air blower 45.

A second outgoing duct 36B in turn is connected to a high-pressure air blower 46 for providing higher flow rates as required. As best seen in FIG.3A-3B, the second outgoing duct 36B is bifurcated into a first branch 38A, which fluidly connects to a blow drying nozzle 18 inside the blow-drying receptacle 8C, and a second branch 38B, which connects the high-pressure air blower 46 to the collector 44 through a T-fitting 38C. The blow-drying nozzle 18 is suitable for drying a cleaned workpieces and blows off remaining moisture and droplets. A motorized valve 39 in the first branch 38A allows variably opening and closing the connection to the blow-drying receptacle 8C as required.

In this arrangement, the lower rate air blower 44 is dedicated to continuously recirculate air from the workspace 5 to the air curtain device 34 at low energy consumption and sufficient volume flow depending on the volume of the housing 4, whereas the higher rate air blower 46 feeds dehumidified and heated air as required, alternatively to supply the air curtain device 34 or to the blow-drying nozzle 18 in the blow-drying receptacle. This configuration is possible because the shutter door 20 typically opens only when drying in the blow-drying receptacle 8C is finished.

For energy efficiency reasons, the characteristics of the low-pressure air blower 45 are chosen to provide an operating point pressure in the range of 10-50Pa, e.g. 20Pa, whereas the characteristics of the high-pressure air blower 46 are chosen for operating point pressures that are at least tenfold, preferably in the range of 500-1500 Pa, e.g. 1000Pa. Accordingly, the high-pressure air blower 46, which has higher energy consumption, may constantly operate in modulated manner at a medium pressure and relatively lower power consumption for supplying the air curtain device 34 and at high-pressure and higher power consumption only for supplying the blow-drying nozzle 18. The higher rate air blower 46 may also operate intermittently, being on only during the short periods of blow-drying and when the shutter door 20 is open while being shut off during a major part of the time.

The air recirculation device 30 of FIGS.2, 3A-3B further comprises two parallel independent incoming ducts 37A, 37B with intakes 31 for admitting vapour-charged air from the workspace 5 and leading vapour containing air to the vapour condenser 10. The piping cross-section of the incoming ducts 37A, 37B corresponds respectively to that of the parallel outgoing ducts 36A, 36B. The ductwork, in particular the outgoing ducts 36A, 36B and the incoming ducts 37A, 37B are located underneath the platform 7 inside the envelope of the support structure 11 for a more compact construction.

As best seen in FIG.3A-3B, each of the two intakes 31 of the air recirculation device 30 that admits vapours to the vapour condenser 10 is arranged to originate from the blow-drying receptacle 8C, i.e. positioned in the lateral wall of the blow-drying receptacle 8C close to the blow-drying nozzle 18. Intakes 31 emanating from the inside of one of the receptacles 8A-8C enable extracting both vapour and heat from very closely to their origin during blow-drying, which is especially advantageous if the vapour condenser 10 includes a heat recovery unit as will be described below. With the other processing receptacles 8A, 8B generating vapour being arranged close to the blow-drying receptacle 8C, the intakes 31 also extract vapour originating from these receptacles 8A, 8B effectively, i.e. close to the origins. Continuously dried and heated air re-enters the workspace 5 through the exits 33 and intermittently also through the blow-drying nozzle 18, which are arranged in the lower half 15B of the workspace 5.

Since admission through the intakes 31 towards the vapour condenser 10 is located at a lower intake level 19 and in front of the industrial robot 9, a salient advantage of the invention lies in avoiding flow paths of recirculated vapour inside the workspace 5 that constantly cross the industrial robot 9, thereby reducing adverse effects on the latter. In fact, as seen in FIG.2, with respect to the shutter door 20 the industrial robot 9 (see FIG.1) is arranged at a position "X" on the far side of two of the processing receptacles 8A, 8B. Hence, a flow pattern is achieved that holds vapour containing air in the lower half 15B of the workspace 5, resembling in behaviour that of ground fog that mainly flows in front of and/or to the side of the industrial robot 9, between the processing receptacles 8A, 8B, 8C.

As can be taken from FIGS. 2-3B, the vapour condenser 10 itself is arranged at a level well below the top 14 of the housing 4, here below the platform level 16 and each of two intakes 31 is arranged at an intake level 19 well below the upper half 15A of the workspace 5, namely immediately below the platform level 16 inside the blow-drying receptacle 8C, as appear from a comparison of FIG.2 and FIG.3A-3B. For the sake of simplification, the intake level 19 is defined as the horizontal plane through the centre of the uppermost intake 31, as illustrated in FIG.3B.

A compact construction is achieved if the blow-drying receptacle 8C with the intakes 31 is located at approximately the same distance from the shutter door 20 compared to the industrial robot 9, while being located laterally thereof, hence the pulling vapour and mist away from the base of the industrial robot 9. Consequently, in the embodiment of FIG.2, each of the processing receptacles 8A, 8B, 8C and the industrial robot 9 are respectively arranged in a corner of the substantially rectangular base of the housing 4, with the shutter door 20 arranged in the sidewall at which the two receptacles 8A, 8B are located. Generally speaking, the invention allows for extracting vapour and heat most closely to its origins thus reducing vapour propagation whilst in the same time reducing necessary piping for the ductwork. The total piping length for the ductwork shown in FIGS.3A-3B for the recirculation device 30 is relatively small.

Alternatively, to the illustrated position of the intakes 31, these may be provided e.g. in the form of an elongated collector located in the platform 7 or immediately above the platform 7, between the exits 33 and the position of the industrial robot 9, schematically shown at reference "X".

As illustrated by dashed lines in FIG.3B, each of the intakes 31 is equipped with an associated mist eliminator 32, e.g. a stainless steel grid with small mesh size, that drains larger droplets and eliminated liquid into the blow-drying receptacle 8C, which in turn has a water draining pipe leading into the wastewater tank, e.g. of a filter device 24 arranged in the lower part of the support structure 11 as seen in FIG.2. The filter device 24 is used to filter contaminants from the cleaning liquid used in the washing receptacles 8A, 8B and has any suitable configuration.

FIG.4-5 illustrate a preferred embodiment of a vapour condenser unit 10 that recovers heat from condensation for heating the dehumidified air. The vapour condenser 10 is housed in a floor-mountable cabinet-type enclosure 12 and comprises a refrigeration machine as heat recovery unit, that is schematically illustrated in FIG.5. The enclosure 12 is of standard design, similar to that of control cabinets 22 or electrical cabinets 23 illustrated in FIG.2.

The vapour condenser 10 has an evaporation cooler module 40 and a heating module 42 that are both configured as separately exchangeable tray-like modules to be removably mounted into the enclosure 12 and fluidly connected to the ductwork as illustrated in FIG.4-5. The lower rate air blower 45 and the high rate air blower 46 are arranged in the upper part of the enclosure 12 of the vapour condenser 10, the latter forming a compact unit with most of or all of the active components that require regular servicing.

As seen in FIG.5, the vapour condenser 10 includes a coolant circuit 50 with a coolant pump 52 recirculates evaporated coolant (refrigerant) from the evaporation cooler module 40 to the heating module 42, where coolant is partially condensed to transfer heat to the air flow previously dehumidified by vapour condensation in the cooler module 40. The coolant circuit 50 may comprise an auxiliary heat exchanger 53 for further cooling the coolant downstream of the heating module 42 and upstream of the cooler module 40, to increase efficiency of the Carnot-cycle.

As schematically shown in FIG.5, both air blowers 45, 46 have their admission originating in a shared plenum serving as collector 54 downstream of the heating module 42. The vapour condenser 10 unit further includes a condensate collector 56 for condensed cleaning liquid drained from the evaporation cooler module 40 and a condensate pump 58 for returning the condensed cleaning liquid back to the fluid circuit, e.g. into the filter device 24 (FIG.2). The outgoing ducts 36A, 36B of each air blower 45, 46 are parallel and independent.

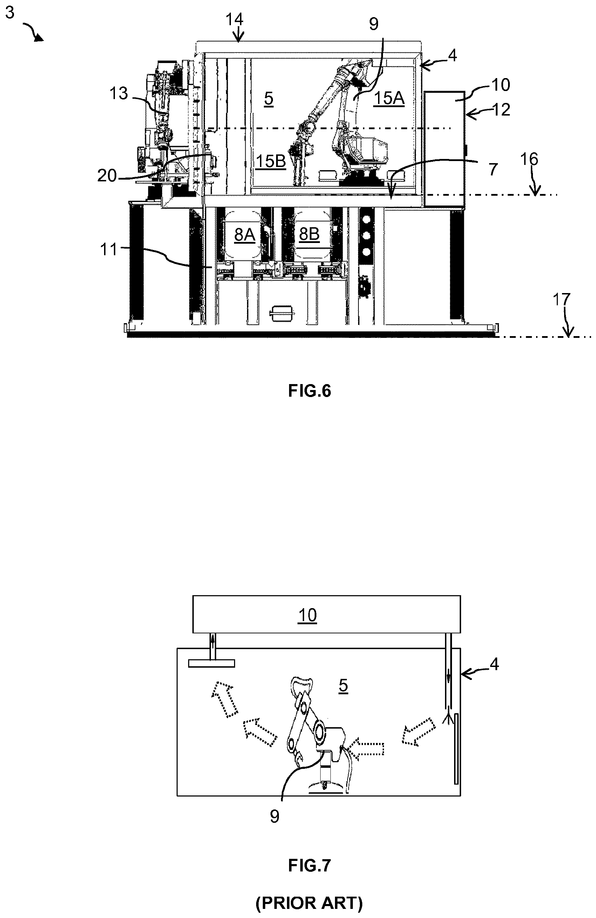

FIG.6 shows a third alternative cleaning installation 3, that differs from the aforementioned embodiment mainly in that the vapour condenser 10, also contained in a cabinet-type enclosure 12, is arranged on the support structure 11, laterally at the side of the housing 4, but below its top 14. The arrangement of FIG.6 may be useful if there is insufficient space underneath the platform 7. The intakes and exits (not shown) can be arranged as in FIG.2-3.

Alternatively, in FIG.6 one exit may debouch immediately from the enclosure 12 into the workspace 5, and another exit at the air curtain close to the shutter door 20, both at approximately half of the height of the workspace 5. The one or more intakes in turn may originate from a lower zone close to the platform 7 underneath the first exit and immediately from the workspace 5 into the enclosure 12 to further reduce piping lengths, while maintaining a "ground fog" type flow pattern, i.e. low flow profile of vapour-charged process air.

FIG.7 is to illustrate a prior art installation as known e.g. from WO 2012/048 921 A2. A main disadvantage is the flow pattern caused by the vapour condenser 10 inside the workspace 5, very schematically illustrated by arrows, that generally crosses predominant positions of the robot 9, thus reducing service intervals and lifetime thereof.

Flow patterns designed to eliminate vapour in a more targeted manner reduce the needed ventilation rate and thus lower energy consumption. As another advantage, cleaning installations 1; 2; 3 according to the invention are generally more maintenance-friendly.

Finally, some process aspects that relate to the recirculation behaviour due the configuration of the air recirculation device 30, e.g. the positioning of the intake 31 at a lower intake level 19, will be described.

By virtue of the low-pressure air blower 45, the first outgoing duct 36A, and the exits 33 the air recirculation device 30 continuously recirculates process air from the workspace 5, admitting vapour containing process air from the lower intake level 19 through the intakes 31, dehumidifying the air in the vapour condenser 10 and returning dried air to the workspace 5. It uses the air curtain nozzles 35 of the air curtain device 34 as exits 33 debouching into the workspace 5, for continuous recirculation at low volumetric rate irrespectively of the state of the shutter door 20. The flow of vapour emanating from the washing receptacles 8A, 8B and/or from the blow-drying receptacle 8C towards the intakes 31, remains in the lower half 15B of the workspace 5. There is no significant flow across the predominant positions of the industrial robot 9. Any recirculation induced flow of vapour into the upper half 15A of the workspace 5 can be substantially eliminated if desired. Alternatively, with an additional exit (not shown) and suitable nozzle shaping, stagnant vapour can be avoided if desired.

With the vapour condenser 10 designed as a heat recovery system according to FIG.5 it continuously recovers heat from condensation in the evaporation cooler module 40 for heating the dried air, thus reducing overall energy consumption of the installations 1; 2; 3. The vapour condenser 10 may be controlled, e.g. through settings of the air blower 45 and/or the coolant pump 52 so that an exit temperature Tₒᵤₜ of air through the exits 33 is well above the mean outside temperature Tₑₙᵥ for efficiency of the air curtain device 34. Exit temperature Tₒᵤₜ may be substantially equal to the intake temperature Tᵢₙ at the intakes 31 so as to avoid cooling the workspace 5.

Alternatively, in order to enhance a generally downwardly directed flow path towards the intakes 31 and natural convection to avoid stagnation, the exit temperature Tₒᵤₜ may be controlled to be lower than the intake temperature Tᵢₙ e.g. by 5-15% while being kept higher than the outside temperature Tₑₙᵥ. Heat loss may be compensated by any suitable measure, e.g. by blowing at higher temperature into the blow-drying receptacle 8C when blow-drying, using an auxiliary heating or a heating module 42 with separated heat exchangers for the first and second outgoing ducts 36A, 36B respectively.

Using a controllable high rate air blower 46, e.g. with a blower with variable-frequency drive, and the motor valve 39, volumetric flow can be provided alternatively at any suitable rate to the air curtain device 34 and to the blow-drying receptacle 8C.

**LEGEND (List of reference signs)**

| | |
|---|---|
| FIG.1-2 | 38A, 38B branches |
| 1, 2 cleaning installation | 38C T-fitting |
| 4 housing | 39 motor valve |
| 5 workspace | 40 evaporation cooler module |
| 7 platform | 42 heating module |
| 8A, 8B, 8C processing receptacles | 44 collector |
| 9, 13 industrial robot | 45 low pressure air blower |
| 10 vapour condenser | 46 high pressure air blower |
| 11 support structure | 50 coolant circuit |
| 12 cabinet-type enclosure | 52 coolant pump |
| 14 top of the housing | 53 auxiliary heat exchanger |
| 15A upper half | 54 collector |
| 15B lower half | 56 condensate collector |
| 16 platform level | 58 condensate pump |
| 17 ground level | |
| 19 intake level | FIG. 6 |
| 20 shutter door | 3 cleaning installation |
| 22 control cabinets | 4 housing |
| 23 electrical cabinet | 5 workspace |
| 24 filter device | 7 platform |
| 27 platform frame | 8A, 8B processing receptacles |
| 28 mounting flange | 9, 13 industrial robot |
| 29 screw holes | 10 vapour condenser |
| X robot | 11 support structure |
| position | 12 cabinet-type enclosure |
| FIG.3-5 | 14 top of the housing |
| 8C blow-drying receptacle | 15A upper half |
| 18 blow-drying nozzle | 15B lower half |
| 30 air recirculation device | 16 platform level |
| 31 intakes | 17 ground level |
| 32 mist eliminator | 20 shutter door |
| 33 exits | |
| 34 air curtain device | FIG. 7 |
| 35 discharge nozzles | 4 housing |
| 36A, 36B outgoing ducts | 5 workspace |
| 37A, 37B incoming ducts | 9 industrial robot |
| | 10 vapour condenser |

## Claims

1. Industrial installation (1; 2; 3) for cleaning workpieces, such as machined metal parts, in particular engine components or transmission components, the installation comprising:
a housing (4) for enclosing a workspace (5) above a platform (7); an industrial robot (9) for handling a workpiece in the workspace, said robot (9) being mounted inside the housing (4), in particular on the platform (7);
an air recirculation device (30) having a vapour condenser (10) and ductwork with one or more intakes (31) for admitting vapour-charged air from the workspace (5) to the vapour condenser (10) and one or more exits (33) for returning dehumidified air to the workspace (5), the vapour condenser (10) preferably including a heat recovery unit (40; 42; 50; 52); **characterized in that** the vapour condenser (10) is arranged below the top (14) of the housing, preferably below the platform (7); and
**in that** each of the one or more intakes (31) is arranged at a level (19) below the upper half (15A) of the workspace, preferably on or below the platform (7).

2. Installation according to claim 1, **characterized in that** it further comprises a support structure (11) that supports the housing (4) and the platform (7) at a raised platform level (16), and **in that** the vapour condenser is arranged below the platform (7) and at least partially within the support structure, preferably partially underneath the platform (7).

3. Installation according to claim 1 or 2, **characterized in that** it comprises at least one processing receptacle (8A; 8B; 8C) with an opening accessible from the workspace (5) and at least one intake (31), preferably each of the one or more intakes, is arranged in the at least one processing receptacle (8C).

4. Installation according to claim 1, 2 or 3, further comprising a shutter door (20) in a side wall of the housing and **characterized in that** an air curtain device (34) is associated to the shutter door (20), the air curtain device being fluidly connected to a first outgoing duct (36A) of the air recirculation device (30).

5. Installation according to claim 4, **characterized in that** the air curtain device (34) is of the horizontal discharge type, preferably with two facing discharge elements (35) at the shutter door.

6. Installation according to claim 4 or 5, **characterized in that** the industrial robot (9) is arranged on the far side of one or more of the processing receptacles (8A, 8B) with respect to the shutter door (20).

7. Installation according to any one of claims 1 to 6, **characterized in that** the vapour condenser (10) is housed in a cabinet-type enclosure (12), the vapour condenser preferably comprising an evaporation cooler module (40) and a heating module (42) configured as separately exchangeable tray-like modules mounted in the cabinet-type enclosure, wherein a first low rate air blower (45) and a second high rate air blower (46) are preferably arranged in the cabinet-type enclosure.

8. Installation according to any one of claims 1 to 7, **characterized in that** there are at least two processing receptacles and the processing receptacles (8A, 8B, 8C) include a blow-drying receptacle (8C) with a blow-drying nozzle (18) connected to a second outgoing duct (36B) of the air recirculation device, wherein preferably each intake (31) that admits vapours to the vapour condenser (10) is arranged in the blow-drying receptacle (8C) .

9. Installation according to any one of claims 1 to 8, in particular according claim 8, **characterized in that** each of the intakes (31) has an associated mist eliminator (32) that is drained into a processing receptacle (8A, 8B, 8C), in particular into the blow-drying receptacle (8C).

10. Installation according to any one of claim 1 to 9, in particular according to claim 4 and 8, **characterized in that** the air recirculation device (30) comprises a first outgoing duct (36A) equipped with a first air blower (45) for supplying dehumidified heated air from the vapour condenser (10) at a first rate, in particular to the air curtain device, and a separate second outgoing duct (36B) equipped with a second air blower (46) for supplying dehumidified heated air from the vapour condenser (10) at a second rate, wherein preferably the second outgoing duct (36B) comprises a bifurcation (38C) with a first branch connected (38A) to the blow-drying receptacle (8C) and a second branch (38B) connected to the air curtain device (34) and a valve (39) in the first branch (38A) to variably open and close the connection to the blow-drying receptacle.

11. Installation according to any one of claim 1 to 10, **characterized in that** there are at least three processing receptacles (8A, 8B, 8C) and the processing receptacles include a first washing receptacle (8A) for pre-washing workpieces with a cleaning liquid, a second washing receptacle (8B) for high-pressure cleaning and/or deburring workpieces and a blow-drying receptacle (8C) for drying the washed part.

12. Installation according to any one of claims 1 to 11, **characterized in that** each of the processing receptacles (8A, 8B, 8C) has an upper mounting flange (28) removably fixed to the platform (7).

13. Method for industrial cleaning of engine components or transmission components, using an installation that comprises:
an air recirculation device equipped with a vapour condenser for condensing vapours having a heat recovery unit; a housing arranged on a platform for enclosing a workspace of an industrial robot that handles automotive workpieces; processing receptacles including a washing receptacle and a blow-drying receptacle, each receptacle having an upper opening accessible to the industrial robot from the workspace (5);
**characterized in that** the method comprises successive cleaning sequences with at least the steps of:
- washing a workpiece in the washing receptacle using a heated washing liquid; and
- blow drying the cleaned workpiece in the blow-drying receptacle;
wherein the industrial robot holds the workpiece while it is processed in said receptacles and transfers the workpiece between said receptacles;
and the method further comprising continuously
- recirculating process air from the workspace, by admitting vapour containing process air from one or more intakes located at a level on or below that of the platform, in particular in the blow-drying receptacle, dehumidifying the intake air by condensing vapours in the vapour condenser and returning the dehumidified air to the workspace.

14. Method according claim 13, **characterized in that** recirculated air is dehumidified and then heated to an exit temperature (Tₒᵤₜ), at which it is returned to the workspace, the exit temperature (Tₒᵤₜ) being higher than the mean outside temperature (Tₑₙᵥ) and lower than or equal to the intake temperature (Tᵢₙ) of vapour-charged air admitted from the workspace to the vapour condenser, wherein preferably Tₑₙᵥ < Tₒᵤₜ < 0,9 Tin.

15. Method according to claim 13 or 14, wherein
the installation further comprises a door equipped with an air curtain device, preferably an automatic shutter door, and the method comprises returning the dehumidified air to the workspace to supply the air curtain device; and wherein
- a low rate air blower continuously recirculates air from within a processing receptacle to the air curtain device and wherein the vapour condenser recovers heat from condensation for heating the dried air; and/or
- a high rate air blower feeds dehumidified and heated air to alternatively supply an air curtain device that equips the door of the installation and a blow-drying device, in particular a blow-drying receptacle.

16. Use of an industrial installation according to any one of claims 1 to 12 or of a method according to any one of claims 13 to 15 for processing a machined metal part of an internal combustion engine, in particular a cylinder block, a cylinder head or a crankshaft.

## Patentansprüche

1. Industrieanlage (1; 2; 3) zum Reinigen von Werkstücken, wie etwa spanend bearbeiteten Metallteilen, insbesondere Motorkomponenten oder Getriebekomponenten, wobei die Anlage aufweist:
eine Einhausung (4) zum Umgeben eines Arbeitsbereichs (5) über einer Plattform (7);
einen Industrieroboter (9) zum Handhaben eines Werkstücks in dem Arbeitsbereich, wobei der Roboter (9) innerhalb der Einhausung (4), insbesondere auf der Plattform (7) montiert ist;
eine Umluftvorrichtung (30) mit einem Schwadenkondensator (10) und einem Leitungssystem mit einer oder mehr Einlassöffnungen (31) zum Einlassen von mit Schwaden beladener Luft aus dem Arbeitsbereich (5) in den Schwadenkondensator (10) und einer oder mehr Austrittsöffnungen (33) zum Rückführen von entfeuchteter Luft zum Arbeitsbereich (5), wobei der Schwadenkondensator (10) bevorzugt eine Wärmerückgewinnungseinheit (40; 42; 50; 52) aufweist; **dadurch gekennzeichnet, dass** der Schwadenkondensator (10) tiefer als die Oberseite (14) der Einhausung, bevorzugt tiefer als die Plattform (7) angeordnet ist; und
dass jede der einen oder mehr Einlassöffnungen (31) auf einer Höhe (19) tiefer als die obere Hälfte (15A) des Arbeitsbereichs, bevorzugt auf oder tiefer als Plattform (7) angeordnet ist.

2. Anlage nach Anspruch 1, **dadurch gekennzeichnet, dass** sie ferner eine Stützstruktur (11) aufweist, die die Einhausung (4) und die Plattform (7) auf einer erhöhten Plattformhöhe (16) stützt, und dass der Schwadenkondensator tiefer als die Plattform (7) und zumindest teilweise innerhalb der Stützstruktur, bevorzugt teilweise unterhalb der Plattform (7) angeordnet ist.

3. Anlage nach Anspruch 1 oder 2, **dadurch gekennzeichnet, dass** sie zumindest einen Bearbeitungsbehälter (8A; 8B; 8C) mit einer Öffnung, die von dem Arbeitsbereich (5) aus erreichbar ist, aufweist und zumindest eine Einlassöffnung (31), bevorzugt jede der einen oder mehr Einlassöffnungen, in dem zumindest einen Bearbeitungsbehälter (8C) angeordnet ist.

4. Anlage nach Anspruch 1, 2 oder 3, die ferner eine Verschlusstür (20) in einer Seitenwand der Einhausung aufweist und **dadurch gekennzeichnet ist, dass** eine Luftschleiervorrichtung (34) der Verschlusstür (20) zugeordnet ist, wobei die Luftschleiervorrichtung mit einem ersten Ausgangskanal (36A) der Umluftvorrichtung (30) in Fluidverbindung steht.

5. Anlage nach Anspruch 4, **dadurch gekennzeichnet, dass** die Luftschleiervorrichtung (34) vom horizontalen Ausleitungstyp ist, bevorzugt mit zwei einander zugewandten Ausleitungselementen (35) an der Verschlusstür.

6. Anlage nach Anspruch 4 oder 5, **dadurch gekennzeichnet, dass** der Industrieroboter (9) auf der entfernten Seite von einem oder mehreren der Bearbeitungsbehälter (8A, 8B) bezogen auf die Verschlusstür (20) angeordnet ist.

7. Anlage nach einem der Ansprüche 1 bis 6, **dadurch gekennzeichnet, dass** der Schwadenkondensator (10) in einem schrankartigen Gehäuse (12) untergebracht ist, wobei der Schwadenkondensator bevorzugt ein Verdampfungskühlermodul (40) und ein Heizmodul (42) aufweist, die als separat austauschbare, schubladenartige Module konfiguriert sind, die im schrankartigen Gehäuse montiert sind, wobei ein erstes Gebläse (45) mit geringerem Durchsatz und ein zweites Gebläse (46) mit höherem Durchsatz bevorzugt im schrankartigen Gehäuse angeordnet sind.

8. Anlage nach einem der Ansprüche 1 bis 7, **dadurch gekennzeichnet, dass** zumindest zwei Bearbeitungsbehälter vorhanden sind und die Bearbeitungsbehälter (8A, 8B, 8C) einen Trockenblasbehälter (8C) mit einer Trockenblasdüse (18), die mit einem zweiten Ausgangskanal (36B) der Umluftvorrichtung verbunden ist, aufweisen, wobei bevorzugt jede Einlassöffnung (31), die Schwaden zum Schwadenkondensator (10) einlässt, in dem Trockenblasbehälter (8C) angeordnet ist.

9. Anlage nach einem der Ansprüche 1 bis 8, insbesondere nach Anspruch 8, **dadurch gekennzeichnet, dass** jede der Einlassöffnungen (31) einen zugehörigen Tropfenabscheider (32) hat, der in einen Bearbeitungsbehälter (8A, 8B, 8C), insbesondere in den Trockenblasbehälter (8C) entleert wird.

10. Anlage nach einem der Ansprüche 1 bis 9, insbesondere nach Anspruch 4 und 8, **dadurch gekennzeichnet, dass** die Umluftvorrichtung (30) einen ersten Ausgangskanal (36A), der mit einem ersten Gebläse (45) zum Zuführen von entfeuchteter, erwärmter Luft von dem Schwadenkondensator (10) mit einem ersten Durchsatz insbesondere zur Luftschleiervorrichtung ausgestattet ist, und einen separaten zweiten Ausgangskanal (36B) aufweist, der mit einem zweiten Gebläse (46) zum Zuführen von entfeuchteter, erwärmter Luft von dem Schwadenkondensator (10) mit einem zweiten Durchsatz ausgestattet ist, wobei der zweite Ausgangskanal (36B) bevorzugt eine Verzweigung (38C) mit einem ersten Zweig (38B), der mit dem Trockenblasbehälter (8C) verbunden ist, und einem zweiten Zweig (38B), der mit der Luftschleiervorrichtung (34) verbunden ist, und ein Ventil (39) im ersten Zweig (38A) zum variablen Öffnen und Schließen der Verbindung zum Trockenblasbehälter aufweist.

11. Anlage nach einem der Ansprüche 1 bis 10, **dadurch gekennzeichnet, dass** zumindest drei Bearbeitungsbehälter (8A, 8B, 8C) vorhanden sind und die Bearbeitungsbehälter einen ersten Waschbehälter (8A) zum Vorwaschen von Werkstücken mit einer Reinigungsflüssigkeit, einen zweiten Waschbehälter (8B) zum Hochdruckreinigen und/oder Entgraten von Werkstücken und einen Trockenblasbehälter (8C) zum Trocknen des gewaschenen Teils aufweisen.

12. Anlage nach einem der Ansprüche 1 bis 11, **dadurch gekennzeichnet, dass** jeder der Bearbeitungsbehälter (8A, 8B, 8C) einen oberen Montageflansch (28) hat, der lösbar an der Plattform (7) befestigt ist.

13. Verfahren zum industriellen Reinigen von Motorkomponenten oder Getriebekomponenten unter Verwendung einer Anlage, die aufweist:
eine Umluftvorrichtung, die mit einem Schwadenkondensator zum Kondensieren von Schwaden umfassend eine Wärmerückgewinnungseinheit ausgestattet ist; eine Einhausung, die auf einer Plattform zum Umgeben eines Arbeitsbereichs eines Industrieroboters, der Kraftfahrzeugwerkstücke handhabt, angeordnet ist;
Bearbeitungsbehälter, die einen Waschbehälter und einen Trockenblasbehälter umfassen, wobei jeder Behälter eine obere Öffnung hat, die vom Arbeitsbereich (5) aus für den Industrieroboter erreichbar ist;
**dadurch gekennzeichnet, dass** das Verfahren aufeinanderfolgende Reinigungsabläufe mit zumindest den folgenden Schritten aufweist:
- Waschen eines Werkstücks im Waschbehälter unter Verwendung einer erwärmten Waschflüssigkeit; und
- Trockenblasen des gereinigten Werkstücks im Trockenblasbehälter;
wobei der Industrieroboter das Werkstück hält, während es in den Behältern Bearbeitet wird, und das Werkstück zwischen den Behältern transferiert;
und das Verfahren ferner aufweist: kontinuierliches
- Umwälzen von Prozessluft von dem Arbeitsbereich durch Einlassen von Schwaden, die Prozessluft enthalten, von einer oder mehr Einlassöffnungen, die sich auf einer Höhe auf oder tiefer als jene der Plattform befinden, insbesondere im Trockenblasbehälter, Entfeuchten der Einlassluft durch Kondensieren von Schwaden im Schwadenkondensator und Rückführen der entfeuchteten Luft zum Arbeitsbereich.

14. Verfahren nach Anspruch 13, **dadurch gekennzeichnet, dass** Umluft entfeuchtet und dann auf eine Austrittstemperatur (Tₒᵤₜ) erwärmt wird, bei der sie zum Arbeitsbereich rückgeführt wird, wobei die Austrittstemperatur (Tₒᵤₜ) höher als die mittlere Außentemperatur (Tₑₙᵥ) und niedriger als oder gleich der Einlasstemperatur (Tᵢₙ) von mit Schwaden beladener Luft ist, die von dem Arbeitsbereich zum Schwadenkondensator eingelassen wird, wobei bevorzugt Tₑₙᵥ < Tₒᵤₜ < 0,9 Tᵢₙ.

15. Verfahren nach Anspruch 13 oder 14, wobei die Anlage ferner eine Tür aufweist, die mit einer Luftschleiervorrichtung ausgestattet ist, bevorzugt eine automatische Verschlusstür, und das Verfahren das Rückführen der entfeuchteten Luft zum Arbeitsbereich aufweist, um die Luftschleiervorrichtung zu versorgen; und wobei
- ein Gebläse mit geringerem Durchsatz Luft von innerhalb eines Bearbeitungsbehälters zur Luftschleiervorrichtung kontinuierlich rückführt und wobei der Schwadenkondensator Kondensationswärme zum Erwärmen der getrockneten Luft rückgewinnt; und/oder
- ein Gebläse mit höherem Durchsatz entfeuchtete und erwärmte Luft zuführt, um abwechselnd eine Luftschleiervorrichtung, die die Tür der Anlage ausstattet, und eine Trockenblasvorrichtung, insbesondere einen Trockenblasbehälter zu versorgen.

16. Verwendung einer Industrieanlage nach einem der Ansprüche 1 bis 12 oder eines Verfahrens nach einem der Ansprüche 13 bis 15 zum Bearbeiten eines spanend bearbeiteten Metallteils eines Verbrennungsmotors, insbesondere eines Zylinderblocks, eines Zylinderkopfs oder einer Kurbelwelle.

## Revendications

1. Installation industrielle (1 ; 2 ; 3) pour nettoyer des pièces à travailler, telles que des pièces métalliques usinées, en particulier des composants de moteur ou des composants de transmission, l'installation comportant :
une enceinte (4) pour entourer un espace de travail (5) au-dessus d'une plate-forme (7) ;
un robot industriel (9) pour manipuler une pièce à travailler dans l'espace de travail, ledit robot (9) étant monté à l'intérieur de l'enceinte (4), en particulier sur la plate-forme (7) ;
un dispositif de recirculation d'air (30) ayant un condenseur de vapeur (10) et un système de conduits avec une ou plusieurs entrées (31) pour admettre de l'air chargé en vapeur de l'espace de travail (5) vers le condenseur de vapeur (10) et une ou plusieurs sorties (33) pour renvoyer de l'air déshumidifié vers l'espace de travail (5), le condenseur de vapeur (10) incluant de préférence une unité de récupération de chaleur (40 ; 42 ; 50 ; 52) ; **caractérisée en ce que**
le condenseur de vapeur (10) est agencé au-dessous de la partie supérieure (14) de l'enceinte, de préférence au-dessous de la plate-forme (7) ; et
**en ce que** chacune de l'une ou plusieurs entrée(s) (31) est agencée à un niveau (19) au-dessous de la moitié supérieure (15A) de l'espace de travail, de préférence sur ou au-dessous de la plate-forme (7).

2. Installation selon la revendication 1, **caractérisée en ce qu'**elle comprend en outre une structure de support (11) qui supporte l'enceinte (4) et la plate-forme (7) à un niveau de plate-forme surélevé (16), et **en ce que** le condenseur de vapeur est agencé au-dessous de la plate-forme (7) et au moins partiellement au sein de la structure de support, de préférence partiellement sous la plate-forme (7).

3. Installation selon la revendication 1 ou 2, **caractérisée en ce qu'**elle comprend au moins un réceptacle de traitement (8A ; 8B ; 8C) avec une ouverture accessible depuis l'espace de travail (5) et au moins une entrée (31), de préférence chacune de la ou des entrées, est agencée dans l'au moins un réceptacle de traitement (8C).

4. Installation selon la revendication 1, 2 ou 3, comprenant en outre une porte d'obturation (20) dans une paroi latérale de l'enceinte et **caractérisée en ce qu'**un dispositif de rideau d'air (34) est associé à la porte d'obturation (20), le dispositif de rideau d'air étant relié de manière fluidique à un premier conduit de sortie (36A) du dispositif de recirculation d'air (30).

5. Installation selon la revendication 4, **caractérisée en ce que** le dispositif de rideau d'air (34) est du type à évacuation horizontale, de préférence avec deux éléments d'évacuation (35) en vis-à-vis au niveau de la porte d'obturation.

6. Installation selon la revendication 4 ou 5, **caractérisée en ce que** le robot industriel (9) est agencé sur le côté éloigné d'un ou de plusieurs réceptacles des réceptacles de traitement (8A, 8B) par rapport à la porte d'obturation (20).

7. Installation selon l'une quelconque des revendications 1 à 6, **caractérisée en ce que** le condenseur de vapeur (10) est logé dans un boîtier (12) de type armoire de contrôle, le condenseur de vapeur comprenant de préférence un module de refroidissement par évaporation (40) et un module de chauffage (42) configurés comme des modules de type tiroir séparément échangeables montés dans le boîtier de type armoire de contrôle, dans laquelle une première soufflerie d'air à débit moins élevé (45) et une deuxième soufflerie d'air à débit plus élevé (46) sont de préférence agencées dans le boîtier de type armoire de contrôle.

8. Installation selon l'une quelconque des revendications 1 à 7, **caractérisée en ce qu'**il y a au moins deux réceptacles de traitement et les réceptacles de traitement (8A, 8B, 8C) incluent un réceptacle de séchage par soufflage (8C) avec une buse de séchage par soufflage (18) reliée à un deuxième conduit de sortie (36B) du dispositif de recirculation d'air, dans laquelle de préférence chaque entrée (31) qui admet des vapeurs vers le condenseur de vapeur (10) est agencée dans le réceptacle de séchage par soufflage (8C).

9. Installation selon l'une quelconque des revendications 1 à 8, en particulier selon la revendication 8, **caractérisée en ce que** chacune des entrées (31) a un éliminateur de brouillard (32) associé qui est drainé dans un réceptacle de traitement (8A, 8B, 8C), en particulier dans le réceptacle de séchage par soufflage (8C).

10. Installation selon l'une quelconque des revendications 1 à 9, en particulier selon les revendications 4 et 8, **caractérisée en ce que** le dispositif de recirculation d'air (30) comprend un premier conduit de sortie (36A) équipé d'une première soufflerie d'air (45) pour fournir de l'air déshumidifié et chauffé du condenseur de vapeur (10) à un premier débit, en particulier vers le dispositif de rideau d'air, et un deuxième conduit de sortie séparé (36B) équipé d'une deuxième soufflerie d'air (46) pour fournir de l'air déshumidifié et chauffé du condenseur de vapeur (10) à un deuxième débit, dans laquelle de préférence le deuxième conduit de sortie (36B) comprend une bifurcation (38C) avec une première ramification (38A) reliée au réceptacle de séchage par soufflage (8C) et une deuxième ramification (38B) reliée au dispositif de rideau d'air (34) et une vanne (39) dans la première ramification (38A) afin d'ouvrir et de fermer de manière variable la connexion au réceptacle de séchage par soufflage.

11. Installation selon l'une quelconque des revendications 1 à 10, **caractérisée en ce qu'**il y a au moins trois réceptacles de traitement (8A, 8B, 8C) et les réceptacles de traitement incluent un premier réceptacle de lavage (8A) pour prélaver des pièces à travailler avec un liquide de nettoyage, un deuxième réceptacle de lavage (8B) pour nettoyer à haute pression et/ou ébavurer des pièces à travailler et un réceptacle de séchage par soufflage (8C) pour sécher la pièce lavée.

12. Installation selon l'une quelconque des revendications 1 à 11, **caractérisée en ce que** chacun des réceptacles de traitement (8A, 8B, 8C) a une bride de montage supérieure (28) fixée de manière amovible à la plate-forme (7).

13. Procédé de nettoyage industriel de composants de moteur ou de composants de transmission, à l'aide d'une installation qui comprend :
un dispositif de recirculation d'air équipé d'un condenseur de vapeur pour condenser des vapeurs et ayant une unité de récupération de chaleur ; une enceinte agencée sur une plate-forme pour entourer un espace de travail d'un robot industriel qui manipule des pièces à travailler automobiles ; des réceptacles de traitement incluant un réceptacle de lavage et un réceptacle de séchage par soufflage, chaque réceptacle ayant une ouverture supérieure accessible au robot industriel depuis l'espace de travail (5) ;
**caractérisé en ce que** le procédé comprend des séquences de nettoyage successives avec au moins les étapes de :
- laver une pièce à travailler dans le réceptacle de lavage à l'aide d'un liquide de lavage chauffé ; et
- sécher par soufflage la pièce à travailler nettoyée dans le réceptacle de séchage par soufflage ;
dans lequel le robot industriel maintient la pièce à travailler pendant qu'elle est traitée dans lesdits réceptacles et transfère la pièce à travailler entre lesdits réceptacles ;
et le procédé comprenant en outre de façon continue
- la recirculation d'air de traitement de l'espace de travail, par l'admission d'air de traitement contenant de la vapeur provenant d'une ou plusieurs entrées situées à un niveau égal à ou au-dessous de celui de la plate-forme, en particulier dans le réceptacle de séchage par soufflage, la déshumidification de l'air d'admission par condensation des vapeurs dans le condenseur de vapeur et le renvoi de l'air déshumidifié dans l'espace de travail.

14. Procédé selon la revendication 13, **caractérisé en ce que** l'air remis en circulation est déshumidifié puis chauffé à une température de sortie (Tₒᵤₜ), à laquelle il est renvoyé dans l'espace de travail, la température de sortie (Tₒᵤₜ) étant supérieure à la température extérieure moyenne (Tₑₙᵥ) et inférieure ou égale à la température d'entrée (Tᵢₙ) de l'air chargé en vapeur admis de l'espace de travail vers le condenseur de vapeur, dans lequel de préférence Tₑₙᵥ < Tₒᵤₜ < 0,9 Tin.

15. Procédé selon la revendication 13 ou 14, dans lequel l'installation comprend en outre une porte équipée d'un dispositif de rideau d'air, de préférence une porte d'obturation automatique, et le procédé comprend le retour de l'air déshumidifié vers l'espace de travail afin d'alimenter le dispositif de rideau d'air ; et dans lequel
- une soufflerie d'air à débit moins élevé remet continuellement l'air en circulation de l'intérieur d'un réceptacle de traitement vers le dispositif de rideau d'air et dans lequel le condenseur de vapeur récupère la chaleur de la condensation pour chauffer l'air séché ; et/ou
- une soufflerie d'air à débit plus élevé alimente en air déshumidifié et chauffé afin d'alimenter alternativement un dispositif de rideau d'air qui équipe la porte de l'installation et un dispositif de séchage par soufflage, en particulier un réceptacle de séchage par soufflage.

16. Utilisation d'une installation industrielle selon l'une quelconque des revendications 1 à 12 ou d'un procédé selon l'une quelconque des revendications 13 à 15 pour traiter une pièce métallique usinée d'un moteur à combustion interne, en particulier un bloc-cylindres, une culasse ou un vilebrequin.
